(19) Europäisches Patentamt
European Patent Office
Office européen des brevets

(11) Veröffentlichungsnummer : **0 094 060**
**B1**

(12) # EUROPÄISCHE PATENTSCHRIFT

(45) Veröffentlichungstag der Patentschrift : **26.03.86**

(51) Int. Cl.⁴ : **B 01 D 13/04**, C 08 G 77/02

(21) Anmeldenummer : **83104496.1**

(22) Anmeldetag : **06.05.83**

(54) **Verfahren zur Herstellung von Membranen auf der Basis von Kieselsäureheteropolykondensaten, auf diese Weise herstellbare Membranen sowie deren Verwendung.**

(30) Priorität : **06.05.82 DE 3217047**

(43) Veröffentlichungstag der Anmeldung : **16.11.83 Patentblatt 83/46**

(45) Bekanntmachung des Hinweises auf die Patenterteilung : **26.03.86 Patentblatt 86/13**

(84) Benannte Vertragsstaaten : **AT CH DE FR GB IT LI NL SE**

(56) Entgegenhaltungen :
**EP-A- 0 021 422**
**DE-A- 2 026 079**
**DE-A- 2 634 604**
**DE-A- 2 758 415**
**DE-A- 2 925 969**
**DE-B- 1 520 956**
**FR-A- 1 564 281**
**GB-A- 2 072 047**
**US-A- 3 762 566**
**US-A- 3 767 737**

(73) Patentinhaber : **Fraunhofer-Gesellschaft zur Förderung der angewandten Forschung e.V.**
**Leonrodstrasse 54**
**D-8000 München 19 (DE)**

(72) Erfinder : **Schmidt, Helmut, Dr.**
**Tilman-Riemenschneider-Strasse 15**
**D-8706 Höchberg (DE)**
Erfinder : **Kaiser, Alfred, Dr.**
**Am Rosengarten 18**
**D-8702 Kist (DE)**
Erfinder : **Scholze, Horst, Prof., Dr.**
**Georg-Eydel-Strasse 2**
**D-8700 Würzburg (DE)**

(74) Vertreter : **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

**EP 0 094 060 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Membranen auf der Basis von Kieselsäureheteropolykondensaten, das die direkte Erzeugung auch dünnster Membranschichten auf einem Träger ermöglicht.

Membranen auf der Basis von Kieselsäureheteropolykondensaten zeigen ausgezeichnete Beständigkeit gegen Säuren und organische Lösungsmittel und sind auch im pH-Bereich bis etwa 10 recht stabil. Darüberhinaus sind ihre Gefügeeigenschaften, z. B. Hydrophilie, Hydrophobie, Porosität etc., innerhalb weiter Bereiche variierbar, wenn man die Art und Konzentration der Ausgangsverbindungen und Katalysatoren sowie die Herstellungsbedingungen geeignet wählt.

Aus der DE-OS-27 58 415 ist es bekannt, Kieselsäureheteropolykondensate zu Membranen zu verarbeiten, indem man die in kompakten Blöcken anfallenden Polykondensate mechanisch zu sehr dünnen Scheiben schneidet, die dann direkt oder nach vorherigem Schleifen als Membranen eingesetzt werden. Da die Kieselsäureheteropolykondensate jedoch oft nicht elastisch genug sind, brechen die Membranscheiben beim Schneiden und auch die notwendige Membranfläche wird nach dieser Methode meist nicht erreicht.

Ein weiteres Verfahren zur Herstellung von Membranen besteht darin, eine Lösung des Kieselsäureheteropolykondensats in einem organischen Lösungsmittel auf eine plane Unterlage zu gießen und das Lösungsmittel verdunsten zu lassen. Der auf diese Weise erhaltene Membranfilm ist jedoch unverstärkt und deshalb mechanisch zu wenig stabil.

In der DE-OS-29 25 969 ist ein anderes Verfahren zur Herstellung von porösen Membranen auf der Basis von Kieselsäureheteropolykondensaten an der Grenzfläche einer organischen und einer wäßrigen Phase beschrieben. Da die entstehenden Membranen jedoch aufgrund des Kontakts mit einer wäßrigen Phase sehr wasserhaltig sind, besteht beim Trocknen die Gefahr einer übermäßigen Schrumpfung mit damit verbundener Rißbildung.

Die hydrolytische Polykondensation der Ausgangskomponenten zu Kieselsäureheteropolykondensaten verläuft unter Substanzaustritt (Wasserabspaltung, Lösungsmittelaustritt), so daß es unvermeidlich zu einer Schrumpfung der Polykondensate kommt. Es wurde deshalb bisher nicht für möglich gehalten, die Herstellung und Trocknung der Membran direkt auf einem stützenden oder verstärkenden Träger durchzuführen ; vielmehr mußte damit gerechnet werden, daß die Membran unter den auftretenden Spannungen reißt.

Überraschenderweise wurde nun gefunden, daß sich bei der Reaktion der Ausgangskomponenten auf der Oberfläche eines Trägers ein Membranfilm ausbildet, der beim Trocknen trotz der zu erwartenden Schrumpfung zusammenhängend bleibt und nicht reißt. Ferner wurde gefunden, daß insbesondere beim Heranführen einer oder mehrerer Reaktionskomponenten über die Gasphase an die Trägeroberfläche direkt Membranen mit ausgezeichneten physikalischen und mechanischen Eigenschaften in Form eines dünnen Oberflächenfilms erhalten werden.

Gegenstand der Erfindung sind das in den Patentansprüchen bezeichnete Verfahren zur Herstellung von Membranen auf Basis von Kieselsäureheteropolykondensaten, die auf diese Weise herstellbaren Membranen und deren Verwendung zur Stofftrennung.

Im erfindungsgemäßen Verfahren erfolgt die hydrolytische Polykondensation des oder der Kieselsäurederivate in Gegenwart von Wasser und gegebenenfalls einem Kondensationskatalysator an der Oberfläche eines Trägers, der die entstehende Membran stützt.

Zusätzlich zu dem oder den Kivelsäurederivaten Kann man mindestens eine Oxidkomponente verwenden.

Vorzugsweise werden eine oder mehrere, z. B. alle, Reaktionskomponenten über eine Gasphase an die Trägeroberfläche geführt. Zu diesem Zweck bringt man den unbehandelten oder mit einer oder mehreren Reaktionskomponenten vorbehandelten Träger mit einer oder mehreren anderen gasförmigen Reaktionskomponenten in Berührung. Obwohl hierbei grundsätzlich beliebige Kombinationen angewandt werden können, ist es bevorzugt, den Träger mit Wasser und gegebenenfalls dem Kondensationskatalysator zu tränken oder in der Gasphase vorzubehandeln und dann das Kieselsäurederivat über die Gasphase der Trägeroberfläche zuzuführen.

Eine andere Variante besteht darin, den Träger mit dem oder den Kieselsäurederivaten zu tränken oder zu beschichten und dann das Wasser sowie gegebenenfalls den Kondensationskatalysator über die Gasphase der Trägeroberfläche zuzuführen. Zum Tränken oder Beschichten des Trägers mit dem Kieselsäurederivat kann dieses in Substanz oder als Lösung in einem geeigneten organischen Lösungsmittel verwendet werden.

Bei Mehrkomponentensystemen läßt sich die Zusammensetzung der Membran über den Partialdruck der Einzelkomponenten steuern. Dies gelingt z. B. dadurch, daß man (1) die Zusammensetzung des zu verdampfenden Gemisches der Einzelkomponenten geeignet wählt und dieses Gemisch dann auf die entsprechende Temperatur erhitzt oder aber (2) die Einzelkomponenten getrennt auf die zur Erreichung des notwendigen Partialdruckes erforderliche Temperatur erwärmt. Der Partialdruck der gasförmigen Einzelkomponenten kann insbesondere zur Herstellung sehr dünner Membranen auch dadurch gesteuert werden, daß man in die Gasphase der dampfförmigen oder verdampften Reaktionskomponente einen Inertgasstrom, z. B. Stickstoff, einleitet. Bei Mehrkomponentensystemen können die dampfförmigen oder verdampften Reaktionskomponenten der Trägeroberfläche gleichzeitig oder aufeinanderfolgend zugeführt werden, so daß auch Composite-Membranen herstellbar sind.

Die Zuführung der Reaktionskomponenten über die Gasphase wird in der Praxis so durchgeführt, daß man den Träger in geeignetem Abstand über dem zu verdampfenden Mittel anordnet, vorzugsweise in einem Abstand von 0,5 bis 20 cm. Bei Verwendung flüssiger Träger werden die zu verdampfenden Reaktionskomponenten z. B. auf die Oberfläche eines in einem getrennten Behälter enthaltenen flüssigen Trägers aufdestilliert.

Druck und Temperatur sind bei der Gasphasenreaktion nicht besonders beschränkt, sondern richten sich nach der Art der Reaktionskomponenten und den apparativen Gegebenheiten. Gewöhnlich erfolgt die Gasphasenreaktion bei Raumtemperatur bis zu etwa 150 °C, vorzugsweise bis zum Siedepunkt der verdampfenden oder flüchtigen Komponente. Die Reaktion kann z. B. in Luft oder einer Inertgasatmosphäre bei Normaldruck, erhöhtem oder vermindertem Druck durchgeführt werden, vorzugsweise bei Normaldruck. Die Einwirkungszeit der Reaktionskomponenten auf den Träger richtet sich nach der gewünschten Membrandicke und den Verfahrensbedingungen, beträgt jedoch im allgemeinen 0,5 Minuten bis mehrere Stunden.

In einer anderen Ausführungsform des erfindungsgemäßen Verfahrens werden eine oder mehrere Reaktionskomponenten über eine flüssige Phase an die Trägeroberfläche geführt. Auch hier sind grundsätzlich beliebige Kombinationen denkbar. Z. B. kann man einen mit Wasser und gegebenenfalls Kondensationskatalysator vorbehandelten Träger mit der Oberfläche einer Lösung des Kieselsäurederivats in einem organischen Lösungsmittel in Berührung bringen oder aber man sprüht eine oder mehrere Reaktionskomponenten gleichzeitig oder aufeinanderfolgend in Substanz oder als wäßrige oder organische Lösungen auf die Oberfläche des unbehandelten oder mit einer oder mehreren anderen Reaktionskomponenten vorbehandelten Träger auf.

In einer besonders bevorzugten Ausführungsform des Flüssigphasenverfahrens führt man eine oder mehrere, z. B. alle, Reaktionskomponenten über zwei miteinander nicht mischbare flüssige Phasen an die Oberfläche des Trägers heran, der in diesem Fall unbehandelt oder mit einer oder mehreren anderen Reaktionskomponenten vorbehandelt und an der Grenzfläche der beiden flüssigen Phasen angeordnet ist. Beispielsweise kann man einen unbehandelten oder mit Katalysator vorbehandelten Träger an der Grenzfläche beider flüssigen Phasen fixieren.

Die beiden miteinander nicht mischbaren Phasen können beliebige wäßrige und nicht-wäßrige Systeme darstellen, z. B. in Form von zwei organischen Phasen, etwa einer Phase aus aliphatischen, cycloaliphatischen, aromatischen oder aliphatisch-aromatischen Kohlenwasserstoffen oder Halogenkohlenwasserstoffen, wie Petrolether, Pentan, Cyclohexan, Benzol, Toluol oder Tetrachlorkohlenstoff, und die andere Phase aus Alkoholen, wie Methanol, Ethanol, n-Propanol Isopropanol und n-Butanol. Alternativ kann die eine Phase auch aus den genannten Kohlenwasserstoffen und Halogenkohlenwasserstoffen oder Ethern, wie Diethylether und Tetrahydrofuran, und die andere Phase aus Wasser oder wäßrigen Lösungen bestehen.

Auch bei der Flüssigphasenreaktion sind Druck und Temperatur nicht besonders beschränkt. Gewöhnlich arbeitet man bei —20° bis +150 °C, vorzugsweise bei Raumtemperatur, und vermindertem oder erhöhtem Druck, vorzugsweise Normaldruck. Die Behandlungszeit beträgt ebenfalls gewöhnlich 0,5 Minuten bis mehrere Stunden.

Die nach einem der vorstehend beschriebenen Verfahren auf der Trägeroberfläche erhaltenen Membranen werden vorzugsweise 1 bis 24 Stunden bei Temperaturen von Raumtemperatur bis 120 °C getrocknet und/oder 10 Minuten bis 24 Stunden bei 50° bis 250 °C wärmebehandelt (gehärtet). Gegebenenfalls kann vor der Wärmebehandlung 1 Minute bis 1 Stunde mit Wasser oder Wasserdampf von Raumtemperatur bis 150 °C behandelt werden.

Die erfindungsgemäß herstellbaren Membranen sind je nach ihrer Zusammensetzung und den Herstellungsbedingungen dicht oder porös und haben eine Dicke von z. B. $< 1$ µm bis zu 500 µm. Ihre physikalische Form hängt von der Art des verwendeten Trägers ab. Gewöhnlich werden Flachmembranen hergestellt, jedoch umfaßt die Erfindung z. B. auch Hohlfaser- und Schlauchmembranen.

Als Träger eignen sich beliebige poröse oder dichte Materialien, z. B. in Form von Netzen, Sieben, Geweben, Nadelfilzen, Vliesen, Platten, Folien oder Formkörpern. Verwendbare Werkstoffe sind z. B. Kunststoffe, wie Polyethylen, Polypropylen, Polytetrafluorethylen und Polyamide, Cellulose, Cellulosederivate, Gläser, poröse Gläser, Sinterkeramik, Metalle und Kohlenstoff. Bevorzugte Träger sind z. B. Gewebe und Vliese aus Kunststoffasern, Glasfasern, Keramikfasern oder Kohlefasern und Papiere, wie Filterpapiere.

Poröse Träger können gegebenenfalls mit einem nach der Membranbildung wieder entfernbaren (z. B. ausschmelzbaren oder auslösbaren) Füllstoff imprägniert sein, z. B. Polymerisaten, Wachsen oder Paraffinen. Von derartigen Trägern, aber auch von geeigneten dichten festen Trägern oder flüssigen Trägern, wie Quecksilber oder Paraffinöl, die insbesondere für die Gasphasenreaktion von Interesse sind, kann die Membran nach der Herstellung wieder abgelöst werden.

Verwendbare Kieselsäurederivate sind z. B. ein oder mehrere Silane der allgemeinen Formel

$$SiR_a(R'Y)_bX_{(4-a-b)}$$

in der R Alkyl, Alkenyl, Aryl, Arylalkyl, Alkylaryl, Arylalkenyl oder Alkenylaryl bedeutet ;

R' Alkylen, Phenylen, Alkylenphenylen oder Alkenylen darstellt, wobei diese Reste durch Sauerstoff- oder Schwefelatome oder -NH-Gruppen unterbrochen sein können ;

Y Halogen oder eine gegebenenfalls substituierte Amino-, quaternäre Ammonium-, Amid-, Polyamid-, Aldehyd-, Keto-, Carboxy-, Hydroxy-, Polyol-, Mercapto-, Cyano-, Diazo-, Carbonsäurealkylester-, Sulfonsäure-, Phosphorsäure-, Acryloxy-, Methacryloxy-, Epoxid- oder Vinylgruppe ist ;

X Wasserstoff, Halogen, Hydroxy, Alkoxy, Acyloxy oder $-NR''_2$ (R'' = Wasserstoff und/oder Alkyl) bedeutet, jedoch nicht alle Reste X Wasserstoff sind, und

a und b den Wert 0, 1, 2 oder 3 haben, wobei (a+b) nicht größer als 3 ist.

Spezielle Beispiele für diese Silane sind in den DE-OS-27 58 414, 27 58 415, 29 25 969, 30 11 761 und 30 48 369 beschrieben.

Bei Verwendung mehrerer Ausgangssilane sind deren Mengenverhältnisse nicht besonders beschränkt, sondern richten sich nach den gewünschten Eigenschaften der Membranen. Anstelle der monomeren Silane können als Kieselsäurederivate auch Vorkondensate dieser Silane verwendet werden, die dadurch erhältlich sind, daß man die Ausgangskomponenten gegebenenfalls in Gegenwart eines Kondensationskatalysators und/oder eines organischen Lösungsmittels nicht-hydrolytisch vorkondensiert. Dies kann z. B. 1 Minute bis 24 Stunden bei −20° bis +130 °C erfolgen, wobei dünnflüssige Oligomere mit einem Polymerisationsgrad erhalten werden, der etwa 10 bis 20 Monomereinheiten entspricht. Neben den Silan-Homovorkondensaten sind auch entsprechende Misch-Vorkondensate mit den nachstehenden Oxidkomponenten einsetzbar.

Die gegebenenfalls verwendete Oxidkomponente leitet sich von Elementen der Hauptgruppen Ia bis Va oder den Nebengruppen IVb oder Vb des Periodensystems ab. Hierbei sind Oxidkomponenten von Ti, Zr, B, Al oder V bevorzugt und solche von Ti besonders bevorzugt. Die Oxidkomponente besteht bei der Gasphasenreaktion z. B. aus einer flüchtigen Verbindung, die unter den Reaktionsbedingungen ein schwer-flüchtiges Oxid bildet. Bei der Flüssigphasenreaktion verwendet man lösliche oder mit der flüssigen Phase homogen mischbare Verbindungen, die unter den Reaktionsbedingungen ein schwer-flüchtiges Oxid bilden. Spezielle Oxidkomponenten dieser Art sind ebenfalls in den genannten Offenlegungsschriften beschrieben.

Bei Verwendung mehrerer Ausgangssilane und/oder Oxidkomponenten können diese entweder gleichzeitig oder aufeinanderfolgend der Trägeroberfläche zugeführt werden, so daß Composite-Membranen herstellbar sind.

Die zur hydrolytischen Polykondensation bzw. Auskondensation der Vorkondensate verwendete Wassermenge ist nicht beschränkt. Gewöhnlich werden 10 bis 150 % der zur vollständigen Hydrolyse der vorhandenen hydrolysierbaren Gruppen stöchiometrisch erforderlichen Wassermenge eingesetzt.

Als Katalysatoren eignen sich beliebige Protonen oder Hydroxylionen liefernde Verbindungen, z. B. organische oder anorganische Säuren oder Basen, einschließlich Amine und saurer oder basischer Ionenaustauscherharze. Beispiele für geeignete Katalysatoren sind ebenfalls in den oben genannten Offenlegungsschriften aufgeführt. Die Katalysatormenge ist erfindungsgemäß nicht beschränkt, sondern kann innerhalb weiter Grenzen gewählt werden.

Die erfindungsgemäß hergestellten Membranen können auf übliche Weise in Filterrahmen oder Kassetten eingespannt oder eingelegt werden und eignen sich z. B. zum Rückhalten und Abtrennen von Feinteilchen, ionischen oder molekularen Verbindungen aus flüssigen oder gasförmigen Medien, für die Hyperfiltration, Umkehrosmose und Dialyse sowie allgemein für Flüssig/Flüssig-, Flüssig/Fest-, Fest/Gasförmig-, Flüssig/Gasförmig- und Gasförmig/Gasförmig-Trennungen.

Je nach der Art der rückzuhaltenden Substanz verwendet man Kieselsäureheteropolykondensate aus Ausgangssilanen mit hydrophilen oder hydrophoben, sauren oder basischen etc. Substituenten. Soll eine hydrophile Verbindung rückgehalten werden, so weisen die Ausgangssilane vorwiegend hydrophobe Substituenten auf, z. B. Aryl- und Aralkylreste.

Soll andererseits eine hydrophobe Verbindung rückgehalten werden, verwendet man vorzugsweise Ausgangssilane mit hydrophilen Substituenten, z. B. Hydroxy-, Ester- oder Säureresten. Die erfindungsgemäßen Membranen können auch als Ionenaustauschermembranen eingesetzt werden, indem man entweder geeignet substituierte Ausgangssilane einsetzt oder die Membranen auf die nachstehend beschriebene Weise mit Derivatisierungsmitteln modifiziert, so daß sie für den Ionenaustausch geeignete Gruppen aufweisen, z. B. tertiäre oder quaternäre Aminogruppen, phenolische Hydroxylgruppen oder aliphatische oder aromatische $—SO_3^-$ oder $—COO^-$-Gruppen.

Die erfindungsgemäßen Membranen ermöglichen eine beliebige Anpassung an spezifische Problemstellungen. Durch geeignete Wahl der Ausgangskomponenten und deren Mengenverhältnisse können beliebige Eigenschaftskombinationen z. B. im Hinblick auf die chemische und thermische Beständigkeit, die mechanischen und die Absorptionseigenschaften erzielt werden.

In diesem Zusammenhang kann es vorteilhaft sein, die funktionellen Gruppen der Kieselsäureheteropolykondensate bzw. der daraus hergestelltem Membranen nach üblichen Methoden der organischen Chemie zu modifizieren. Je nach der Reaktivität der rückzuhaltenden Verbindungen bzw. Substanzen kann man das Kieselsäureheteropolykondensat derivatisieren und-

/oder eine andere Verbindung ankoppeln. Geeignete Derivatisierungsmittel sind z. B. Amine, Carbonsäuren, Säurechloride, Thiocarbamate, Thiocarbaminsäurechlorid, Diazoverbindungen, Ester, Sulfide etc. Die Modifizierung einer µ-Aminopropylgruppen enthaltenden Membran kann z. B. derart erfolgen, daß man die Membran 30 bis 60 Minuten bei Raumtemperatur mit einer wäßrigen 2,5 prozentigen Glutaraldehydlösung behandelt. Das Diazoderivat kann z. B. durch Umsetzen mit p-Nitrobenzoylchlorid, Reduktion der Nitrogruppe zum Amin oder Diazotierung mit Salpetriger Säure hergestellt werden. Wenn die Membran durch Verwendung geeigneter funktioneller Silane bereits Anilinogruppen enthält, kann sofort mit salpetriger Säure diazotiert werden. Durch Umsetzen von Aminogruppen der Membran mit Thiophosgen gelangt man zum Isothiocyanoderivat.

Die erfindungsgemäßen Membranen zeichnen sich durch ausgezeichnete mechanische Festigkeit, thermische Belastbarkeit, Lösungsmittelbeständigkeit und gutes Quellverhalten aus.

Die folgenden Beispiele erläutern die Erfindung, ohne sie zu beschränken.

Beispiel 1

Ein Filterpapier wird mit wäßriger 2 N HCl getränkt und 1 min über einem Gemisch aus 70 Molprozent Tetraethoxysilan und 30 Molprozent Dimethyldiethoxysilan im Abstand von ca. 5 cm bei Raumtemperatur aufgehängt. Das so beschichtete Substrat wird bei 110 °C 1 h getrocknet.

Beispiel 2

Ein handelsübliches Glasfaservlies wird 10 min bei einer Temperatur von 80 °C über eine konzentrierte wäßrige $NH_3$-Lösung im Abstand von 5 cm gehalten, anschließend 0,5 min bei Raumtemperatur über einem Gefäß mit Tetramethoxysilan fixiert und dann bei 110 °C 1 h getrocknet.

Beispiel 3

In 30 ml Tetrachlorkohlenstoff werden 3 ml Tetramethoxysilan gelöst und mit 20 ml $H_2O$ überschichtet. In der Phasengrenzfläche wird ein handelsübliches Glasfaservlies fixiert und die wäßrige Phase vorsichtig mit 2 ml 6 N HCl versetzt. Nach 30 min wird die organische Phase abgelassen und das Substrat mit der anhaftenden Membran bei allmählich von 70 °C auf 110 °C steigender Temperatur 2 h getrocknet.

Beispiel 4

21,0 ml (3-Glycidoxypropyl)-trimethoxysilan und 7,2 ml (3-Methacryloxypropyl)-trimethoxysilan werden zusammen mit 0,1 g Azoisobutyronitril solange bei 110 °C erhitzt, bis die Bande bei 1640 $cm^{-1}$ im IR-Spektrum verschwunden ist. Nach Zugabe von 1,0 g Tetraethyltitanat und 20,0 ml Ethanol wird zum Rückfluß erhitzt. Die Lösung wird mit 3,0 ml wasserfreier methanolischer 1 N Salzsäure versetzt und 120 min weiter unter Rückfluß erhitzt, wobei nach 30, 60 und 90 min weitere 3,0 ml ethanolische 1 N Salzsäure zugegeben werden. Diese Lösung wird im Wasserstrahlvakuum bei 70 °C eingedampft, der Rückstand wird wieder in 20 ml Ethanol aufgenommen. Ein Filterpapier wird mit dieser Lösung benetzt und bei 80 °C 0,5 h im Abstand von 10 cm über einem Wasserbad fixiert. Anschließend wird das Substrat bei 130 °C 2 h getrocknet.

Beispiel 5

Ein handelsübliches Glasfaservlies wird mit konzentrierter Salzsäure benetzt und anschließend 5 min im Abstand von ca. 5 cm bei Raumtemperatur über einem Gefäß mit Tetramethoxysilan fixiert. Anschließend wird 1 h bei 110 °C getrocknet. Das beschichtete Vlies wird in mehreren Zyklen jeweils zunächst mit Staub beladen, bis der ursprüngliche Druckabfall von 400 Pa auf über 1 000 Pa gestiegen ist und anschließend durch Vibration wieder abgereinigt.

**Patentansprüche**

1. Verfahren zur Herstellung von Membranen auf Basis von Kieselsäureheteropolykondensaten durch hydrolytische Polykondensation mindestens eines Kieselsäurederivats in Gegenwart von Wasser und gegebenenfalls eines Kondensationskatalysators, dadurch gekennzeichnet, daß man die Polykondensation an der Oberfläche eines Trägers durchführt, der die entstehende Membran stützt.

2. Verfahren nach Anspruch 1, dadurch gekennzeichnet, daß man eine oder mehrere Reaktionskomponenten über eine Gasphase an die Trägeroberfläche führt.

3. Verfahren nach Anspruch 2, dadurch gekennzeichnet, daß man alle Reaktionskomponenten über die Gasphase der Trägeroberfläche zuführt.

4. Verfahren nach Anspruch 2, dadurch gekennzeichnet, daß man den Träger mit Wasser und gegebenenfalls dem Kondensationskatalysator tränkt oder in der Gasphase vorbehandelt und das oder die Kieselsäurederivate über die Gasphase der Trägeroberfläche zuführt.

5. Verfahren nach Anspruch 2, dadurch gekennzeichnet, daß man den Träger mit dem oder den Kieselsäurederivaten tränkt oder beschichtet und das Wasser sowie gegebenenfalls den Kondensationskatalysator über die Gasphase der Trägeroberfläche zuführt.

6. Verfahren nach Anspruch 1 oder 2, dadurch gekennzeichnet, daß man eine oder mehrere Reaktionskomponenten über eine flüssige Phase an die Trägeroberfläche führt.

7. Verfahren nach Anspruch 6, dadurch gekennzeichnet, daß man die Reaktionskomponenten über zwei, miteinander nicht mischbare flüssige Phasen zuführt, an deren Grenzfläche der Träger angeordnet ist.

8. Verfahren nach Anspruch 6, dadurch gekennzeichnet, daß man einen mit Wasser und gegebenenfalls Kondensationskatalysator vorbehandelten Träger mit der Oberfläche einer Lösung des oder der Kieselsäurederivate in einem organischen Lösungsmittel in Berührung bringt.

9. Verfahren nach Anspruch 6, dadurch gekennzeichnet, daß man eine oder mehrere Reaktionskomponenten in Substanz oder als wäßrige oder organische Lösungen auf die Oberfläche des unbehandelten oder mit einer oder mehreren anderen Reaktionskomponenten vorbehandelten Träger aufsprüht.

10. Verfahren nach Anspruch 7, dadurch gekennzeichnet, daß man einen unbehandelten oder gegebenenfalls mit Wasser und/oder Kondensationskatalysator vorbehandelten Träger an der Grenzfläche der beiden flüssigen Phasen anordnet.

11. Verfahren nach Anspruch 7 oder 10, dadurch gekennzeichnet, daß man zwei miteinander nicht mischbare organische Phasen verwendet.

12. Verfahren nach Anspruch 7 oder 10, dadurch gekennzeichnet, daß man eine wäßrige und eine organische flüssige Phase verwendet.

13. Verfahren nach einem der Ansprüche 1 bis 12, dadurch gekennzeichnet, daß man zusätzlich zu dem oder den Kieselsäurederivaten mindestens eine Oxidkomponente verwendet.

14. Verfahren nach einem der Ansprüche 1 bis 13, dadurch gekennzeichnet, daß man mehrere Kieselsäurederivate und/oder Oxidkomponenten gleichzeitig oder aufeinanderfolgend der Trägeroberfläche zuführt.

15. Membranen, hergestellt nach dem Verfahren eines der Ansprüche 1 bis 14.

16. Verwendung der Membranen nach Anspruch 15 zur Stofftrennung.

**Claims**

1. A process for the production of membranes on the basis of silicic acid heteropolycondensates by hydrolytic polycondensation of at least one silicic acid derivative in the presence of water and, optionally, a condensation catalyst, characterized by carrying out the polycondensation at the surface of a support which supports the membrane being formed.

2. The process of claim 1, wherein one or more reactants are fed to the surface of the support via a gas phase.

3. The process of claim 2, wherein all the reactants are fed to the surface of the support via the gas phase.

4. The process of claim 2, wherein the support is impregnated with water and, optionally, the condensation catalyst, or is pretreated in the gas phase, and the silicic acid derivative(s) is/are fed to the surface of the support via the gas phase.

5. The process of claim 2, wherein the support is impregnated or coated with the silicic acid derivative(s), and the water and, optionally, the condensation catalyst are fed to the surface of the support via the gas phase.

6. The process of claim 1 or 2, wherein one or more reactants are fed to the surface of the support via a liquid phase.

7. The process of claim 6, wherein the reactants are fed via two mutually immiscible liquid phases, at the interface between which the support is located.

8. The process of claim 6, wherein a support which has been pretreated with water and, optionally, the condensation catalyst is brought into contact with the surface of a solution of the silicic acid derivative(s) in an organic solvent.

9. The process of claim 6, wherein one or more reactants are sprayed, in undiluted form or as aqueous or organic solutions, into the surface of the untreated support or the support which has been pretreated with one or more other reactants.

10. The process of claim 7, wherein an untreated support or a support which has, optionally, been pretreated with water and/or condensation catalyst, is located at the interface between the two liquid phases.

11. The process of claim 7 or 10, wherein two mutually immiscible organic phases are used.

12. The process of claim 7 or 10, wherein an aqueous liquid phase and an organic liquid phase are used.

13. The process of any one of claims 1 to 12, wherein at least one oxide component is used in addition to the silicic acid derivative(s).

14. The process of any one of claims 1 to 13, wherein several silicic acid derivatives and/or oxide components are fed to the surface of the support simultaneously or successively.

15. Membranes, produced by the process of any one of claims 1 to 14.

16. The use of the membranes according to claim 15 for separation purposes.

**Revendications**

1. Procédé pour fabriquer des membranes à base d'hétéropolycondensats de l'acide silicique, par polycondensation/hydrolytique d'au moins un dérivé de l'acide silicique en présence d'eau et éventuellement d'un catalyseur de condensation, caractérisé en ce qu'on effectue la polycondensation à la surface d'un support, qui soutient la membrane résultante.

2. Procédé selon la revendication 1, caractérisé en ce qu'on achemine un ou plusieurs constituants de la réaction, par l'intermédiaire d'une phase gazeuse, vers la surface du support.

3. Procédé selon la revendication 2, caractérisé en ce qu'on achemine tous les constituants de la réaction, par l'intermédiaire de la phase gazeuse, vers la surface du support.

4. Procédé selon la revendication 2, caractérisé en ce qu'on imprègne le support avec de l'eau et éventuellement avec le catalyseur de

condensation ou on prétraite le support en phase gazeuse, et l'on achemine le ou les dérivés de l'acide silicique, par l'intermédiaire de la phase gazeuse, vers la surface du support.

5. Procédé selon la revendication 2, caractérisé en ce qu'on imprègne le support avec le ou les dérivés de l'acide silicique ou l'on en revêt le support, et l'on achemine l'eau ainsi que, éventuellement, le catalyseur de condensation, par l'intermédiaire de la phase gazeuse, vers la surface du support.

6. Procédé selon la revendication 1 ou 2, caractérisé en ce qu'on achemine un ou plusieurs constituants de la réaction, par l'intermédiaire d'une phase liquide, vers la surface du support.

7. Procédé selon la revendication 6, caractérisé en ce qu'on achemine les constituants de la réaction par l'intermédiaire de deux phases liquides mutuellement non miscibles, à la surface limite desquelles le support est disposé.

8. Procédé selon la revendication 6, caractérisé en ce qu'on met un support, prétraité par de l'eau et éventuellement par un catalyseur de condensation, en contact avec la surface d'une solution du ou des dérivés de l'acide silicique dans un solvant organique.

9. Procédé selon la revendication 6, caractérisé en ce qu'on projette un ou plusieurs constituants de la réaction sans solvant ou sous forme de solutions aqueuses ou organiques à la surface du support non traité ou prétraité par un ou plusieurs autres constituants de la réaction.

10. Procédé selon la revendication 7, caractérisé en ce qu'on dispose, à la surface limite ou interface des deux phases liquides, un support non traité ou éventuellement prétraité par de l'eau et/ou par le catalyseur de condensation.

11. Procédé selon la revendication 7 ou 10, caractérisé en ce qu'on utilise deux phases organiques mutuellement non miscibles.

12. Procédé selon la revendication 7 ou 10, caractérisé en ce qu'on utilise une phase aqueuse et une phase organique liquide.

13. Procédé selon l'une des revendications 1 à 12, caractérisé en ce qu'on utilise, en plus du ou des dérivés de l'acide silicique, au moins un constituant oxyde.

14. Procédé selon l'une des revendications 1 à 13, caractérisé en ce qu'on achemine simultanément ou successivement vers la surface du support plusieurs dérivés de l'acide silicique et/ou constituants oxyde.

15. Membrane fabriquée par le procédé selon l'une des revendications 1 à 14.

16. Utilisation des membranes selon la revendication 15 pour la séparation de substances.